# EUROPEAN PATENT APPLICATION

(11) **EP 2 123 370 A2**
(43) Date of publication of application: **25.11.2009**
(21) Application number: 09156281.9
(22) Date of filing: 26.03.2009
(51) Int. Cl.: B08B 15/02, B25J 21/02

(54) **Device and method for replacing the air filter of a safety cabinet for handling toxic materials**

(30) Priority: 08.05.2008 IT MI20080833
(71) Applicant: Euroclone S.p.A., 20142 Milano (IT)
(72) Inventor: Aiolfi, Franco, 20148 Milano (IT); Aiolfi, Gualtiero, 20052 Monza (Milano) (IT); Guarino, Michele, 20138 Milano (IT); Rigamonti, Alessandro, 21013 Gallarate (Varese) (IT)
(74) Representative: Petruzziello, Aldo

(57) **Abstract**

A device for replacing the air filter (2) of a safety chamber comprises a tubular body (1) having one end fixed in a tight sealing manner to the filter (2) and the other end fixed in a tight sealing manner to a collar (15) belonging to the cabinet.

A pair of sleeves (3) accessible from the outside is fixed to the tubular body (1).

The filter (2) is replaced by sealing together, in at least two areas, the walls of the tubular body (1); cutting the tubular body (1) between the sealed areas; inserting the portion of tubular body (1) integral with the collar (15) into a second tubular body (1) integral with a second filter (2); fixing the second tubular body (1) in a tight sealing manner to the collar (15); removing from the collar (15), by means of the pair of sleeves (3), the previously sealed portion of tubular body (1), compressing it and placing it in the second tubular body (1).

## Description

The present invention refers to a device for replacing the air filter of a safety cabinet: said device ensures that the contaminated area, situated inside the safety cabinet, remains isolated from the outside environment and prevents those performing maintenance work from coming into direct contact with the contaminated parts of the filter.

The present invention also refers to a method for replacing said filter by means of the above-mentioned device.

Cytostatic and cytotoxic (antiproliferative) drugs are a class of anti-cancer drugs which acts by interacting with DNA, blocking its duplication, or with the components of DNA, preventing their formation.

The recomposition of cytostatic and cytotoxic drugs, consisting of active powders of sub-micronic size and aerosols, and subsequent handling represent a high source of hazard for the operator and for the environment.

For this reason, operations must be carried out inside class II safety cabinets (complying with standards EN12469:2000 and DIN12980 of June 2005 and/or the corresponding international standards) for handling of cytostatic and cytotoxic drugs which, thanks to ventilation and air filtering, ensure the protection of the operator (who carries out preparation of the drugs and cleaning of the work area whilst remaining in a safe area), of those performing maintenance operations, and of the environment.

The work area is passed through by a flow of sterile air which is continually renewed by a plurality of filtering stages in series and mainly by the first filtering stage, situated in the base of the cabinet immediately below the work desk, with the task of intercepting and blocking the passage of aerosols and powders, avoiding deposition thereof in the internal air ducts and thus contamination of the safety cabinet.

This system is normally used in installations intended to treat air which carries substances harmful to man such as radioactive particles, pathogenic organisms, etc.

Because of the highly dangerous nature of the treated products, it is essential to keep the transit and accumulation area of the powders well confined in the filters of the first filtering stage.

In Class II safety cabinets, the operation of replacing the filters of the first filtering stage currently takes place in two ways:
- by removing the filters from the inside of the cabinet through the work chamber and placing them in bags suitable for disposal of contaminated waste: this brings the operator into direct contact with the filters and makes it necessary to keep the cabinet switched on in order to obtain a flow of "cleansing" air which captures the particles of powder which can move and conveys them towards the filter placed immediately upstream of the work area, with the potential risk of contaminating the internal air ducts of the cabinet and the fan motor and increasing the hazards for those carrying out the maintenance operation;
- by removing the filters through a bag of plastic material, placed on the mouth of the base of the cabinet, which creates the continuity of isolation between the contaminated area and the outer environment, but which does not allow easy handling of the filters or of the mechanical parts securing the filters to the cabinet; in this case too, it still remains necessary to have a continuous flow of "cleansing" air, with the potential risk of contaminating the air ducts of the cabinet and the fan motor and increasing the hazards for those carrying out the maintenance operation.

Object of the present invention is to provide a device and method that allow the filters of the safety cabinet for handling toxic materials to be replaced safely, simply and rapidly and that do not have the drawbacks and limitations described above. This object is achieved by means of a device having the characterising features set forth in independent claim 1 and a method comprising the functional steps set forth in independent claim 13.

Other advantageous characteristics of the invention form the subject matter of the dependent claims.

The invention will now be described with reference to purely exemplifying and therefore non-limiting embodiments, illustrated in the appended figures, wherein:
- Figure 1 shows diagrammatically a device according to the invention and a filter;
- Figure 2 shows diagrammatically the device of Figure 1 having one end fixed to the filter;
- Figure 3 shows diagrammatically a front view of a safety cabinet with the front panels of the bottom part removed in order to show the filters of the first filtering stage;
- Figure 4 shows diagrammatically a side view of the safety cabinet of Figure 3 with one of the filters of the first filtering stage extracted;
- Figure 5 shows diagrammatically an enlarged perspective view of the bottom part of the cabinet of Figure 4;
- Figure 6 shows in greater detail the collar placed in the bottom part of the safety cabinet.

In the appended figures corresponding parts will be identified by means of the same reference numerals.

The device forming the subject matter of the present invention comprises a tubular body, one end of which is fixed in a tight sealing manner to the filter whilst the other end is fixed with a tight seal to a collar integral with the safety cabinet.

Two apertures to which a pair of sleeves is fixed in a tight sealing manner are advantageously formed in the side wall of the tubular body.

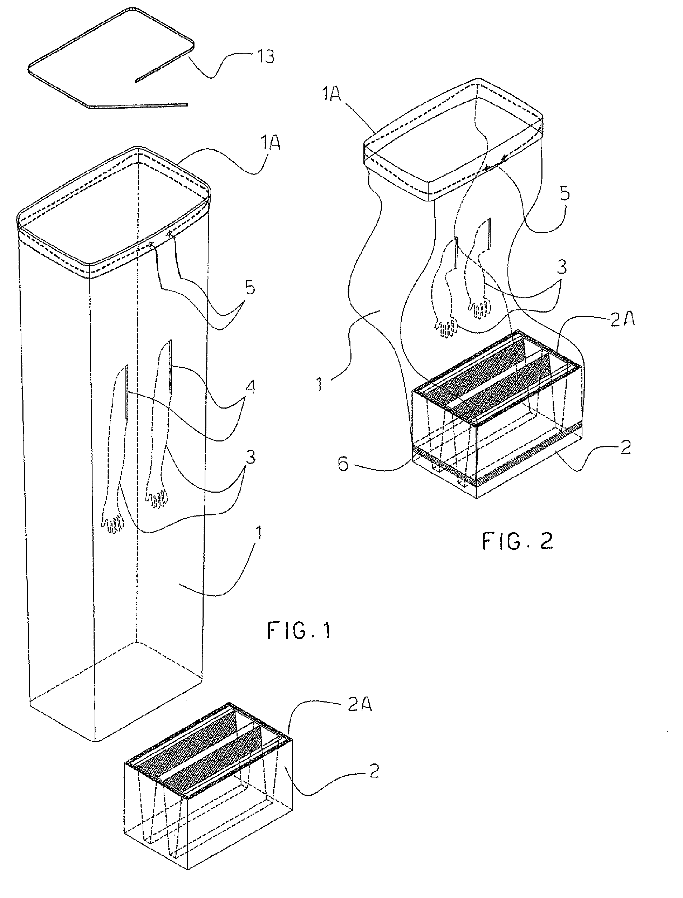

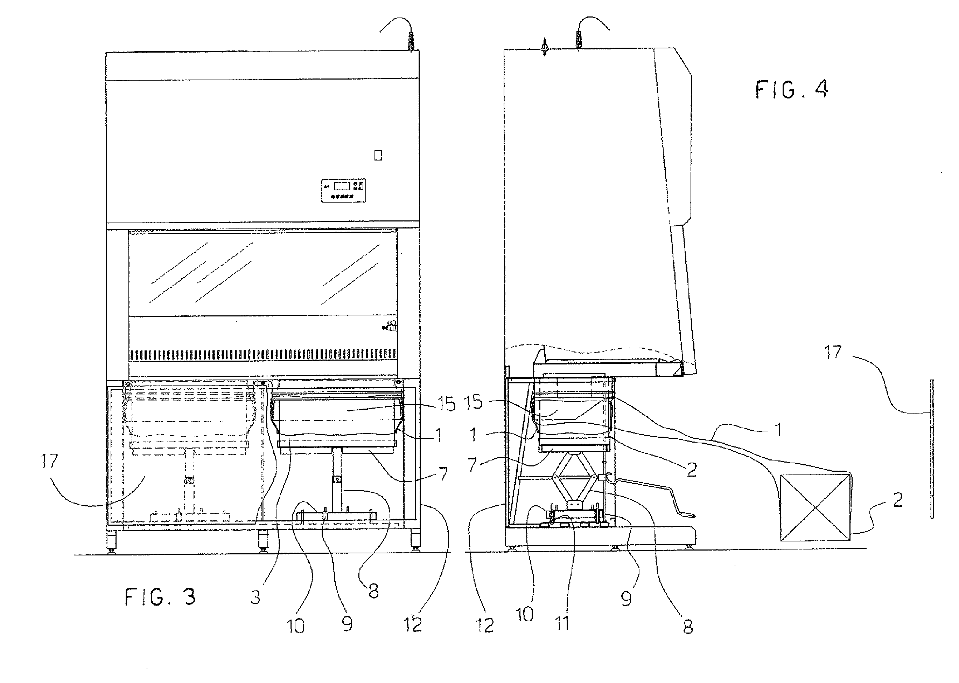

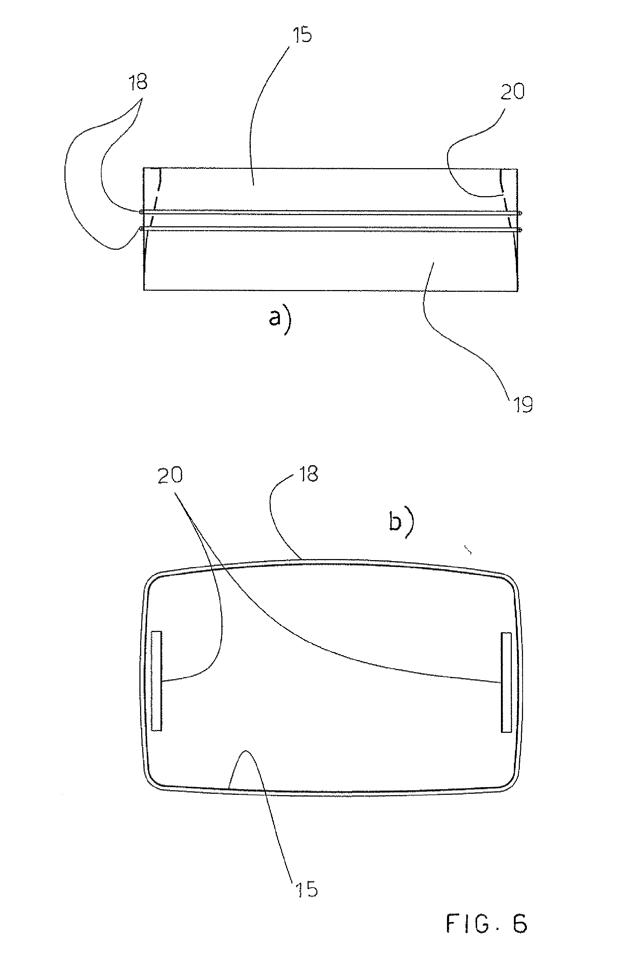

With reference to figure 1, the device of the present invention comprises a tubular body 1, preferably made of polyethylene with a thickness between 60 and 100 microns (preferably 80 microns), provided with two sleeves 3 of the same material (which are accessible by means of apertures 4 made in the side wall of the tubular body 1 and not further described because they are of the type normally used in safety cabinets), an elastic tie 5 placed at the top end 1A of the tubular body 1 and contained in a pocket created by folding back the tubular body 1 and optionally a safety strap 13 to secure the tubular body 1 to a collar 15 (Figures 3 and 6).

The top part 1A of the tubular body 1, provided at least with the elastic tie 5, is placed on the collar 15 situated at the base 12 of the safety cabinet and fixed there by the elastic tie 5 and optionally by the securing strap 13.

The bottom part of the tubular body 1 is joined in a tight sealing manner to a filter 2 of the first filtering stage by means of reinforced adhesive tape (Figure 2) or other functionally equivalent joining means: this tight seal allows the safety cabinet to be turned off during replacement of the filters 2 of the first filtering stage and to ensure that the contaminated area is isolated from the outside environment, preventing direct contact between the filter 2 and the operator who carries out replacement thereof.

A sealing gasket 2A which engages against the collar 15 (Figures 3 and 4) is present on the top part of the filter 2.

As shown in Figure 6, the collar 15 consists of a metal band, rectangular in shape, having slightly outwardly curved walls (Figure 6a), to which are welded two rings 18, round in section and spaced apart from each other; the collar 15 has flaps 19 which extend (downwards in Figure 6) its rear wall and its sidewalls to guide the filter 2 when it is inserted in the collar 15 and two conveyors 20 (Figure 6b) placed inside the metal band to keep the filter 2 centred with respect to the collar 15 when it is inserted into said collar.

In Figure 2 the tubular body 1 is partially folded back on itself.

Figure 3 shows diagrammatically a front view of the safety cabinet with the front panels 17 of the bottom part 12 of the cabinet removed to show, in place, the filters 2 of the first filtering stage which are advantageously placed on a frame 7 which rests on a scissor lift 8 (figure 4) -- or on other functionally equivalent lifting meanswhich raises the filter 2 until the seal gasket 2A of the filter 2 adheres to the collar 15 and which holds it in this position.

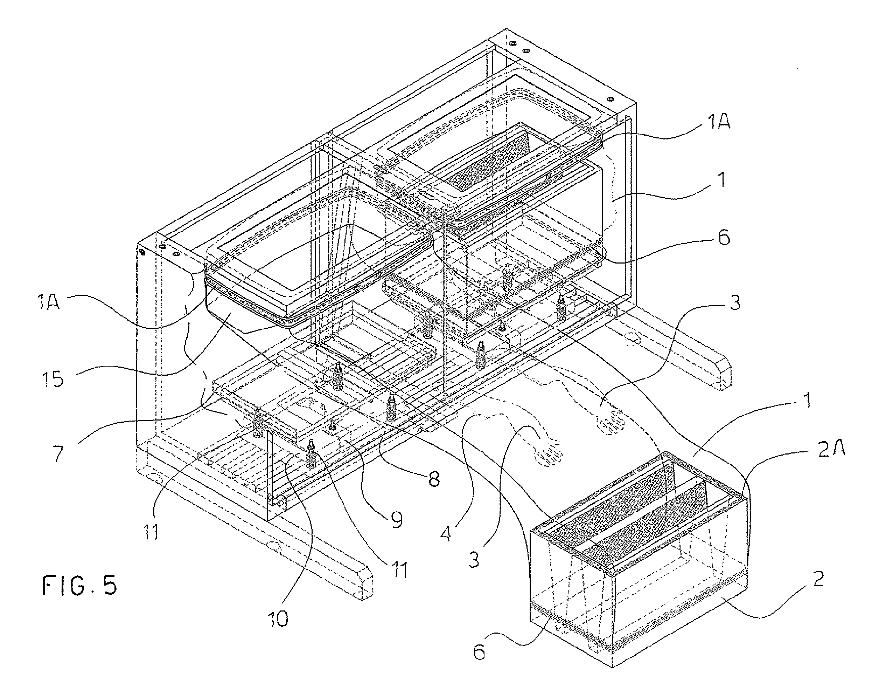

The lift 8 is fixed to a platform 10 which in turn rests, preferably, on four springs 11 (Figure 5) which allow the platform 10 to be lowered with respect to the bottom frame of the base 12 of the safety cabinet though maintaining a constant pressure of the seal 2A of the filter 2 against the collar 15.

The platform 10 advantageously carries a pointer 9 (Figure 5) which, when it touches against the bottom frame of the base 12 of the safety cabinet, indicates that the filter 2 is in place correctly and that its seal gasket 2A is correctly compressed.

During raising of the filter 2, it is advisable for the tubular body 1 to be manually furled in order to avoid possible rubbing between the tubular body 1 and the outer structure of the filter 2, which could damage the integrity of the tubular body 1; at the end of raising, the furled tubular body 1 is advantageously blocked against the filter 2, preferably by means of a containment band provided with a Velcro TM closure, omitted in Figures 3 and 4 for the sake of simplicity of the graphic representation.

Figure 4 shows diagrammatically a side view of the safety cabinet of Figure 3 with one of the filters 2 of the first filtering stage extracted from the safety cabinet; the tubular body 1, previously furled around the filter 2, is spread out.

Figure 5 shows diagrammatically, enlarged, a perspective view of the bottom part 12 of the cabinet of Figure 4. In figure 5, the filter 2 extracted from the cabinet, the tubular body 1 spread out and fixed to the filter 2 and to the collar 15, the platform 10 resting on the springs 11 and the pointer 9 carried by the platform 10 can be seen better.

The present invention further relates to a method for replacing, by means of a tubular body 1, a filter 2 of the first filtering stage of the safety cabinet for handling toxic substances; said method comprises at least the following functional steps:
- after having removed the front panels 17 of the bottom part 12 of the cabinet and removed, if present, the containment band of the furled tubular body 1, lowering (by means of the lift 8) the filter 2 to be replaced and removing it from the bottom part 12 of the cabinet, causing the tubular body 1 integral therewith to be spread out;
- sealing together, in at least two areas, the walls of the tubular body 1 integral with the filter 2 to be replaced and cutting it between two adjacent sealed areas;
- removing the filter 2 to be replaced, enclosed in the portion of the tubular body 1 integral with said filter 2 comprised between the sealed area and that integral with said filter 2;
- inserting the portion of said tubular body 1 integral with the collar 15 into a second tubular body 1 integral with the second filter 2;
- fixing the second tubular body 1 to the collar 15 in a tight sealing manner, preferably above the second ring 18 of the collar 15;
- using the pair of sleeves 3 fixed in a tight sealing manner to apertures 4 made in the side wall of the second tubular body 1 to slip the previously sealed portion of the first tubular body 1 off the collar 15 and place it in the second tubular body 1;
- preferably moving the end of the second tubular body 1 previously fixed above the second ring 18 of the collar 15 into the area between the first and the second ring 18 of the collar 15;
- raising the second filter 2, by means of the lift 8, until its seal gasket 2A adheres to the collar 15, furling the second tubular body 1 and optionally securing it against the second filter 2 by means of the containment band of the furled tubular body 1, if present.

The previously sealed portion of tubular body 1, slipped off the collar 15, is preferably compressed and inserted between the second filter 2 and the second tubular body 1.

In the embodiment previously described the device and the method of the present invention have been used to replace the filter of the first filtering stage of a safety cabinet for handling toxic materials but, without departing from the scope of the invention, they can advantageously be used to replace the filter of any type of safety cabinet.

Again without departing from the scope of the invention, a person skilled in the art can make to the device and the method for replacing the filters of a safety cabinet previously described all the modifications and improvements suggested by normal experience and/or by the natural evolution of the art.

## Claims

1. A device (1) for replacing a filter (2) of a safety cabinet for handling toxic materials, **characterised in that** it comprises a tubular body (1), one end of which is fixed in a tight sealing manner to the filter (2) whilst the other end (1A) is fixed in a tight sealing manner to a collar (15) integral with the base of the safety cabinet, said tubular body (1) comprising a pair of sleeves (3) fixed in a tight sealing manner to apertures (4) formed in its side wall.

2. A device (1) as in claim 1, **characterised in that** it comprises an elastic tie (5) adapted to fix the end (1A) of the tubular body (1) to the collar (15) in a tight sealing manner, the elastic tie (5) being preferably placed in a pocket created by folding back the end (1A) of the tubular body (1) to be fixed to the collar (15)

3. A device (1) as in claim 2, **characterised in that** it further comprises a safety securing strap (13) adapted to fix the end (1A) of the tubular body (1) to the collar (15) in a tight sealing manner.

4. A device (1) as in claim 1, **characterised in that** the end of the tubular body (1) fixed in a tight sealing manner to the filter (2) is fixed to the filter (2) by means of reinforced adhesive tape (6).

5. A device (1) as in claim 1, **characterised in that** the collar (15) consists at least of a metal band with a slightly curved walls, provided with two rings (18), round in section, spaced apart from each other and welded to the metal band.

6. A device (1) as in claim 6, **characterised in that** the collar (15) further comprises flaps (19) which extend its rear wall and sidewalls adapted to guide the filter (2) when it is inserted into the collar (15).

7. A device (1) as in claim 6 or 7, **characterised in that** the collar (15) further comprises two conveyors (20) placed inside the metal band and adapted to keep the filter (2) centred with respect to the collar (15) when it is inserted into said collar.

8. A device (1) as in claim 1, **characterised in that** the filter (2) has, on its top part, a seal gasket (2A) adapted to engage against the collar (15).

9. A device (1) as in claim 9, **characterised in that** the filter (2) is placed on a frame (7) that rests on lifting means (8) adapted to raise the filter (2) until its seal gasket (2A) is made to adhere to the collar (15) and to maintain it in said position.

10. A device (1) as in claim 10, **characterised in that** the lifting means (8) are fixed to a platform (10) resting on elastic means (11) adapted to allow the platform (10) to be lowered with respect to the bottom frame of the base (12) of the safety cabinet though maintaining a constant pressure of the seal gasket (2A) of the filter (2) against the collar (15).

11. A device (1) as in claim 11, **characterised in that** the platform (10) carries a pointer (9) which, when it touches against the bottom frame of the base (12) of the safety cabinet, indicates that the filter (2) is correctly in place and that its seal gasket (2A) is correctly compressed.

12. A method for replacing a filter (2) of a safety cabinet for handling toxic materials by means of a device (1) according to at least one of the preceding claims, **characterised in that** it comprises at least the following functional steps:
- after having removed the front panels (17) of the bottom part (12) of the cabinet, lowering the filter (2) to be replaced and removing it from the safety cabinet, causing spreading out of the tubular body (1) integral with the filter (2) to be replaced;
- sealing together, at least into two areas, the walls of the tubular body (1) integral with the filter (2) to be replaced and cutting it between two adjacent sealed areas;
- removing the filter (2) to be replaced, enclosed in the portion of tubular body (1) integral therewith between the sealed area and the area integral with said filter (2);
- inserting the portion of said tubular body (1) integral with the collar (15) into a second tubular body (1) integral with a second filter (2);
- fixing the second tubular body (1) to the collar (15) in a tight sealing manner;
- using a pair of sleeves (3) fixed in a tight sealing manner to apertures (4) formed in the side wall of the second tubular body (1) to slip the portion of previously sealed tubular body (1) off the collar (15) and place it in the second tubular body (1);
- raising the second filter (2), furling the second tubular body (1), until its seal gasket (2A) is made to adhere to the collar (15).

13. A method as in claim 13 **characterised in that** it comprises the further functional step of removing the containment means of the tubular body (1) integral with said filter before lowering the filter (2) to be replaced.

14. A method as in claim 13, **characterised in that** the portion of the first tubular body (1) slipped off the collar (15) is compressed before being placed between the second filter (2) and the second tubular body (1).

15. A method as in claim 13, **characterised in that** the second tubular body (1) is fixed in a tight sealing manner above the second ring (18) of the collar (15) and, after having slipped the previously sealed portion of the first tubular body (1) off the collar, it is moved into the area between the first and the second ring (18) of the collar (15).
